# EUROPÄISCHE PATENTSCHRIFT

(11) **EP 2 718 059 B1**
(45) Veröffentlichungstag und Bekanntmachung des Hinweises auf die Patenterteilung: **27.01.2016**
(21) Anmeldenummer: 12704002.0
(22) Anmeldetag: 31.01.2012
(51) Int. Cl.: B23Q 11/08

(54) **FALTENBALG**
BELLOWS
SOUFFLET

(30) Priorität: 06.06.2011 DE 202011106742 U
(43) Veröffentlichungstag der Anmeldung: 16.04.2014
(73) Patentinhaber: TRUMPF Laser-und Systemtechnik GmbH, 71254 Ditzingen (DE)
(72) Erfinder: WALSTRA, Olga, 71254 Ditzingen (DE); SAUTER, Dietrich, 72555 Metzingen (DE)
(74) Vertreter: Prüfer & Partner mbB European Patent Attorneys
(86) Internationale Anmeldenummer: PCT/EP2012/051570
(87) Internationale Veröffentlichungsnummer: WO 2012/167955

(56) Entgegenhaltungen:
- DE-A1- 3 240 988
- DE-U1- 9 216 976

## Beschreibung

Die Erfindung betrifft einen Faltenbalg, insbesondere einen Faltenbalg als Schutzabdeckung für Bearbeitungsmaschinen.

Es sind Faltenbälge bekannt, die in Bearbeitungsmaschinen eingesetzt werden, um verschmutzungsempfindliche Bauteile, wie z.B. Führungselemente abzudecken. Dadurch wird ein Verschmutzen z.B. der Führungselemente verhindert und die Standzeit dieser beweglichen Teile wird erhöht.

Die Faltenbälge werden hinsichtlich der Anzahl der Falten und der Tiefe der Falten entsprechend ausgelegt, eine erforderliche Länge in einem ausgezogenen Zustand zu erreichen. Umgekehrt ergibt sich daraus eine bestimmte Länge des Faltenbalgs in einem zusammengedrückten Zustand, die im Folgenden als Blockmaß bezeichnet wird.

Insbesondere in Faltenbälgen aus Textil werden Führungsrahmen vorgesehen, die zum Stabilisieren der Balgform, als Führung in Führungsleisten und als Montagehilfe beim Abwinkeln der Falten zum jeweils nächsten Schenkel dienen. Die Materialstärken der Führungsrahmen tragen wesentlich zum Blockmaß bei.

Dokument DE 92 16 976 U1 offenbart einen Faltenbalg mit Führungsrahmen zwischen jeweils zwei benachbarten Falten.

Das Blockmaß bestimmt oft den Aufwand, insbesondere den bereitzustellenden Bauraum, der für ein Vorsehen des Faltenbalgs aufgewendet werden muss, da bei einer großen Blocklänge in einem zusammengedrückten Zustand des Faltenbalgs ein entsprechend großer Bauraum vorgesehen werden muss.

Um das Blockmaß zu verringern, kann eine Faltentiefe vergrößert werden, um dadurch eine Anzahl der Falten zu verringern. Jedoch wird dadurch der Querschnitt des Faltenbalgs vergrößert und so dass der Bauraum in Bewegungsrichtung zwar reduziert, aber senkrecht dazu wiederum vergrößert wird.

Faltenbälge dienen nicht nur zum Schutz vor feinen Verschmutzungen, sondern verhindern auch, dass größere Teile, beispielsweise Restabschnitte, auf gefährdete Bauteile fallen. Dabei müssen die Faltenbälge aber eine ausreichende Festigkeit aufweisen, um die gefährdeten Bauteile zu schützen, und um nicht selbst beschädigt zu werden. Zudem benötigt der Faltenbalg ein gewisses Maß an Eigensteifigkeit, um seine vorgegebene Kontur aufrecht zu erhalten und beispielsweise keine Störkontur gegenüber in seiner Umgebung befindlichen, insbesondere beweglichen Elementen zu bilden.

Daraus ergibt sich die Aufgabe, einen Faltenbalg mit einem geringen Blockmaß bereitzustellen, der trotzdem eine ausreichende Festigkeit und Steifigkeit aufweist.

Die Aufgabe wird durch die Merkmale des Anspruchs 1 gelöst. Weiterentwicklungen der Erfindung sind Gegenstand der abhängigen Ansprüche.

Durch das Vorsehen der Führungsrahmen, wobei nicht alle Führungsrahmen die gleiche Materialstärke und/oder das gleiche Material aufweisen, sondern die Materialstärke und/oder das Material im Sinne einer Steifigkeit und/oder Festigkeit der Führungsrahmen an die jeweilige örtliche Belastung des Faltenbalgs angepasst sind, kann die Materialstärke entsprechend der Belastung, die an der Stelle des einzelnen Führungsrahmens auftritt, minimal gewählt werden. Somit wird ein Blockmaß des Faltenbalgs verringert und gleichzeitig eine ausreichende Festigkeit des Faltenbalgs über die gesamte Länge sichergestellt.

In einer Ausführungsform wird ein Material gewählt, das aufgrund seiner hohen Steifigkeit bzw. Festigkeit dazu geeignet ist, dass entsprechend einer auftretenden Belastung minimale Materialstärken verwendet werden können. In diesem Fall werden die Materialstärken lokal entsprechend der örtlichen Belastung des Faltenbalgs angepasst, d.h. ausgehend von einer maximalen Belastung bei geringeren Lasten in ihrer Stärke reduziert oder ausgehend von einer Mindestbelastung an besonders beanspruchten Stellen verstärkt.

Alternativ kann die Materialstärke auf konstantem Niveau gehalten werden, indem bei gleicher Materialstärke unterschiedliche Materialien zum Einsatz kommen. Vorteilhafterweise muss bei dieser Variante ggf. nicht über den gesamten Faltenbalg ein kostenintensiveres Material verbaut werden, das einen geringen Bauraum aufweist, sondern nur lokal.

Es versteht sich, dass beide Ausführungsformen je nach vorgegebenem Optimierungsziel auch kombiniert Anwendung finden können.

Die Erfindung wird nun mit Hilfe von Ausführungsbeispielen anhand der beigefügten Zeichnungen erläutert.

Insbesondere zeigen:
- Fig. 1: eine isometrische Darstellung eines Faltenbalgs in einer ersten Ausführungsform; und
- Fig. 2: eine isometrische Darstellung des Faltenbalgs in einer alternativen Ausführungsform mit einer Führungsleiste und Führungselementen an den Führungsrahmen.

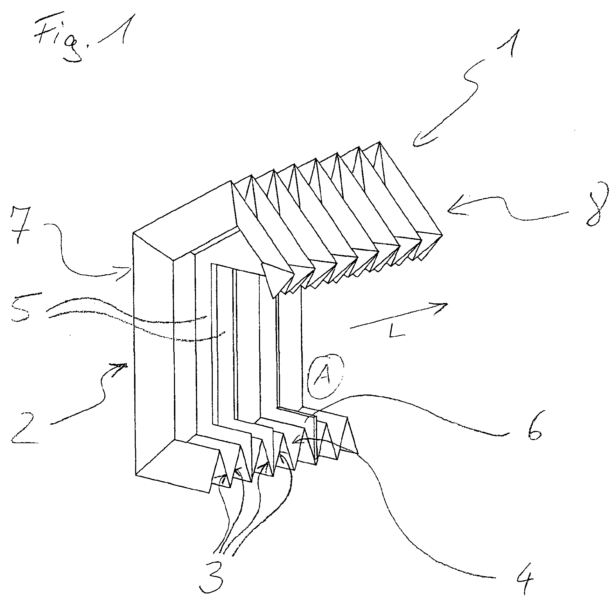

Fig. 1 zeigt eine isometrische Darstellung eines Faltenbalgs 1 aus einem flexiblen Material, z.B. Textil, für eine nicht gezeigte Bearbeitungsmaschine. Der Faltenbalg 1 weist eine äußere Hülle 2 mit einem ersten Ende 7 und einem zweiten Ende 8 auf. Die äußere Hülle 2 weist in ihrer Längsrichtung L mehrere Falten 3 auf, die in der Längsrichtung L einen Querschnitt in einer veränderbaren Zick-Zack-Form aufweisen, d.h. der Winkel der Schenkel zueinander ändert sich mit der Bewegung des Faltenbalgs 1 in der Längsrichtung L, wobei der Winkel bis zu etwa 180° betragen kann. In der Längsrichtung L gesehen weist der Faltenbalg 1 eine annähernde C-Form auf. Gemeinsam mit nicht gezeigten Bauteilen der Bearbeitungsmaschine wird durch die C-Form ein Schutzbereich A gebildet, in dem zu schützende Bauteile der Bearbeitungsmaschine angeordnet sind. Die Form des Faltenbalgs 1 ist alternativ nicht C-förmig, sondern kann abhängig von dem zu schützenden Bauteil und den Bauteilen der Bearbeitungsmaschine, mit denen zusammen der Schutzbereich A gebildet wird, eine annähernd beliebige Form annehmen, vorausgesetzt, dass der Schutzbereich A gebildet wird.

Durch die Zick-Zack-Form der äußeren Hülle 2 ergibt sich zwischen den Falten 3 jeweils ein innerer Zwischenraum 4, der in einem Schnitt entlang Längsrichtung L gesehen im Wesentlichen die Form eines Dreiecks aufweist. In einigen inneren Zwischenräumen 4 sind dünne Führungsrahmen 5 oder dicke Führungsrahmen 6 vorgesehen. Ebenso sind Zwischenräume 4 vorgesehen, in denen kein Führungsrahmen 5, 6 vorgesehen ist. Unter der Dicke der Führungsrahmen 5, 6 ist auch zu verstehen, dass dicke Führungsrahmen 6 eine größere Steifigkeit und/oder Festigkeit aufweisen und dünne Führungsrahmen 5 eine geringere Steifigkeit und/oder Festigkeit aufweisen.

Die Führungsrahmen 5, 6 dienen zur Stabilisierung der Form des Faltenbalgs 1, der Führung des Faltenbalgs 1 in nicht gezeigten Führungsleisten und als Montagehilfe beim Abwinkeln der Falten 3.

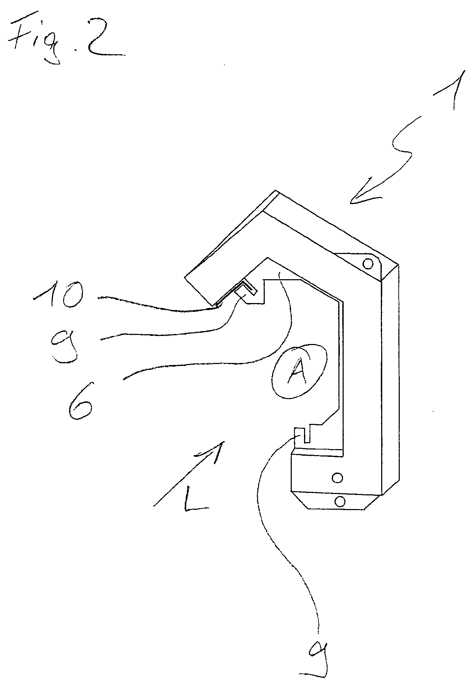

Fig. 2 zeigt einen Faltenbalg 1 und eine Führungsleiste 10, die an einem Gestell der nicht gezeigten Bearbeitungsmaschine angebracht ist. Der Faltenbalg 1 ist hier nur mit einem der dicken Führungsrahmen 6 gezeigt, wobei über seine Länge in der Längsrichtung L mehrere dicke Führungsrahmen 6, dünne Führungsrahmen 5, oder Führungsrahmen mit einer angepassten Materialstärke vorgesehen sein können. Der Führungsrahmen 6 weist hier zwei Führungsnasen als jeweils ein Führungselement 9 auf. Durch das Führungselement 9 wird ein Eingriffsraum für die am oberen Führungselement 9 gezeigte Führungsleiste 10 in dem Führungsrahmen 6 gebildet. Durch die Verwendung der Führungsleiste 10 in Verbindung mit dem Führungselement 9 wird gewährleistet, dass der Faltenbalg 1 auch in dem ausgezogenen Zustand an den Bauteilen der Bearbeitungsmaschine, mit denen der Faltenbalg 1 den Schutzbereich A bildet, anliegt, und so ein Eindringen der Verschmutzung verhindert. In alternativen Ausführungsformen sind nicht alle, aber mindestens einer der dicken Führungsrahmen 6 mit einem Führungselement 9 versehen.

Das Führungselement 9 kann alternativ auch in einer anderen Form, beispielsweise mit einem Eingriffsraum mit einem geschlossenen Querschnitt, z.B. einer Bohrung, für die Führungsleiste, und alternativ auch in einer anderen geeigneten Anzahl, vorgesehen sein.

Um bei einem Faltenbalg 1 die Kraft, die bei einem Bewegen des Faltenbalgs 1 durch unterschiedliche lokale Belastungen, wie u.a. einer Trägheit des Faltenbalgs 1 und einer Reibung zwischen den Führungsrahmen 5, 6 und den Führungsleisten 10 insbesondere in Abhängigkeit von der Entfernung zu beweglichen Enden des Faltenbalgs 1 hervorgerufen wird, daran zu hindern, die Querschnittsform des Faltenbalgs 1 unerwünscht zu verändern, werden in einer alternativen Ausführungsform die Steifigkeit bzw. Festigkeit der Führungsrahmen 5, 6 entsprechend dem Abstand von dem ersten Ende 7 und dem zweiten Ende 8 gewählt. Ausgehend davon, dass das erste Ende 7 an einer unbeweglichen Stelle der Maschine, z.B. einem Maschinengestell, angebracht ist, und das zweite Ende 8 an einer beweglichen Stelle, z.B. einem Führungsschlitten oder einer anderen verfahrbaren Maschinenkomponente, angebracht ist, werden an einer bewegungsintensiveren Stelle, hier also an dem zweiten Ende, das an der beweglichen Stelle angebracht ist, Führungsrahmen mit einer größeren Steifigkeit und/oder Festigkeit, beispielsweise dicke Führungsrahmen 6 mit einer Dicke von 1,5 mm vorgesehen, da hier eine große Kraft und bedingt durch eine größere Auslenkung auch eine höhere Wechselbelastung auftritt, die durch das Bewegen des gesamten Faltenbalgs 1 verursacht wird. An dem ersten Ende, das an der unbeweglichen Stelle der Maschine angebracht ist, werden dagegen Führungsrahmen mit einer geringeren Steifigkeit und/oder Festigkeit, beispielsweise dünne Führungsrahmen 5 mit einer Dicke von 1 mm vorgesehen, da hier nur geringere Kräfte auftreten. Das Verhältnis der Dicke zwischen dicken Führungsrahmen 6 und dünnen Führungsrahmen 5 beträgt in der Regel 3:2, kann aber in Abhängigkeit von der Länge des Faltenbalgs auch anders festgelegt sein. Die Materialstärke kann minimal 0,1 mm betragen.

Der Faltenbalg 1 ist mit seinem ersten Ende 7 nicht zwangsläufig an einer unbeweglichen Stelle der Maschine angebracht. Der Faltenbalg 1 kann in einer alternativen Ausführungsform auch mit seinem ersten Ende 7 an einer weiteren beweglichen Stelle der Maschine angebracht sein, so dass sich beide Enden 7, 8 des Faltenbalgs 1 bewegen. In diesem Fall sind dann die Führungsrahmen mit einer größeren Steifigkeit/Festigkeit and den beiden Enden 7, 8 angeordnet, und die Führungsrahmen mit geringerer Steifigkeit/Festigkeit von den beiden Enden 7, 8 entfernt angeordnet.

Die Steifigkeit der Führungsrahmen 5, 6 ist zum einen abhängig von der Dicke, also der Materialstärke, und zum anderen von einer Steifigkeit des Materials. Je dicker ein Führungsrahmen 5, 6 ausgeführt ist und/oder je steifer das Material ist, aus dem der Führungsrahmen hergestellt ist, umso steifer ist der Führungsrahmen 5, 6.

Auch die Festigkeit der Führungsrahmen 5, 6 ist zum einen von der Dicke, also der Materialstärke, zum anderen von einer Festigkeit des Materials abhängig. Je dicker ein Führungsrahmen 5, 6 ausgeführt ist und/oder je größer die Festigkeit des Materials ist, aus dem der Führungsrahmen hergestellt ist, desto größer ist die Festigkeit der Führungsrahmen 5, 6.

In Abhängigkeit von der auftretenden Belastung kann an einer bestimmten Stelle des Faltenbalgs 1 der Führungsrahmen mit der gewünschten Steifigkeit und/oder Festigkeit eingesetzt werden.

Die Materialstärke der Führungsrahmen 5, 6 ist nicht auf zwei Materialstärken beschränkt, sondern die Materialstärke kann speziell auf die jeweilige Anforderung an einer bestimmten Stelle des Faltenbalgs 1 abgestimmt sein und somit alternativ zu der Materialstärke der dicken Führungsrahmen 6 oder der dünnen Führungsrahmen 5 festgelegt werden.

Um alternativ oder zusätzlich äußere Kräfte, die auf den Faltenbalg 1 einwirken, zu berücksichtigen, variieren die Steifigkeit und/oder die Festigkeit, also z.B. die Materialstärken der Führungsrahmen 5, 6 auch entsprechend weiterer Kriterien. In Abhängigkeit von der Größe der äußeren Kräfte sind entweder dünne Führungsrahmen 5 bei geringeren äußeren Kräften oder dicke Führungsrahmen 6 bei größeren äußeren Kräften, beispielsweise einem Darauffallen von großen Restabschnitten, oder alternativ Führungsrahmen mit der angepassten Materialstärke, erforderlich, um die Form des Faltenbalgs 1 zu stabilisieren. An den Abschnitten des Faltenbalgs 1, an denen größere äußere Kräfte zu erwarten sind, werden dickere Führungsrahmen 6 verwendet, wohingegen an den Abschnitten des Faltenbalgs 1, an denen kleine oder keine äußeren Kräfte zu erwarten sind, nur dünnere Führungsrahmen 5 oder auch keine Führungsrahmen eingesetzt werden.

Weiterhin kann bei dem Vorsehen von dünnen Führungsrahmen 5, die für eine äußere Belastung durch äußere Kräfte und der inneren Belastung durch Trägheit und Reibung ausreichend sind, jedoch das Problem auftreten, dass das Führungselement 9, das an dem dünnen Führungsrahmen 5 vorgesehen ist, auf Grund der geringen Materialstärke abbricht. Um dieses Problem zu verhindern, und trotzdem die Blocklänge zu minimieren, können nur dicke Führungsrahmen 6 mit den Führungselementen 9 vorgesehen sein, wobei aber nicht in jedem Zwischenraum 4 ein Führungsrahmen vorgesehen ist, sondern die Führungsrahmen in einer größtmöglichen Anzahl von Zwischenräumen 4 weggelassen werden.

Die Führungsrahmen 5, 6 können also alternativ in allen Zwischenräumen 4 vorgesehen sein, oder eine beliebige Anzahl der Zwischenräume 4 zwischen den Führungsrahmen 5, 6 kann ohne Führungsrahmen 5, 6 vorgesehen sein.

Bedarfsweise wird zumindest einer der Führungsrahmen zwischen zwei Führungsrahmen 5, 6 mit gleicher Materialstärke oder zwischen zwei Führungsrahmen mit unterschiedlichen Materialstärken weggelassen.

Bei einem Weglassen des Führungsrahmens in einem Zwischenraum wird bei der Montage des Faltenbalgs 1 an der entsprechenden Falte 3 eine Schablone benutzt, um die Falte 3 abzuwinkeln. Die Absicherung der Faltrichtung wird durch Fixierung der Faltrichtung, z.B. durch Abnähen, Verschweißen, Kleben oder Pressen, sichergestellt. Eine folienartige Schablone, die nur für die Absicherung der Faltrichtung beim Fixieren eingesetzt wird, kann nach diesem Fertigungsschritt wieder entfernt werden.

Der Faltenbalg 1 wird grundsätzlich hinsichtlich einer Minimierung des Blockmaßes, also der Länge des Faltenbalgs 1 in einem zusammengedrückten Zustand, dahingehend optimiert, dass die Führungsrahmen 5, 6 möglichst entfallen oder mit möglichst geringer Materialstärke vorgesehen sind.

## Patentansprüche

1. Faltenbalg (1) für eine Bearbeitungsmaschine,
mit einer äußeren Hülle (2) mit mehreren Falten (3), wobei die Hülle (2) in einer Längsrichtung des Faltenbalgs (1) in Zick-Zack-Form gefaltet ist und ein erstes Ende (7) und ein zweites Ende (8) aufweist, und
mit mehreren Führungsrahmen (5, 6), die jeweils in einem inneren Zwischenraum (4) zwischen zwei der benachbarten Falten (3) vorgesehen sind, **dadurch gekennzeichnet, dass**
nicht alle Führungsrahmen (5, 6) eine gleiche Steifigkeit aufweisen, und
nicht alle Führungsrahmen (5, 6) eine gleiche Materialstärke aufweisen,
so daß die Führungnahmen (5,6) an die jeweilige örtliche Belastung des Faltenbalgs (1) angepasst sind.

2. Faltenbalg (1) gemäß Anspruch 1, **dadurch gekennzeichnet, dass** nicht alle Führungsrahmen eine gleiche Festigkeit aufweisen.

3. Faltenbalg (1) gemäß Anspruch 2, **dadurch gekennzeichnet, dass** nicht alle Führungsrahmen (5, 6) aus einem identischen Material hergestellt sind, und die Führungsrahmen (5, 6) aus Materialien mit einer unterschiedlichen Festigkeit bestehen.

4. Faltenbalg (1) gemäß einem der vorangehenden Ansprüche, **dadurch gekennzeichnet, dass** nicht alle Führungsrahmen (5, 6) aus einem identischen Material hergestellt sind, und die Führungsrahmen (5, 6) aus Materialien mit unterschiedlichen Steifigkeiten bestehen.

5. Faltenbalg (1) gemäß einem der Ansprüche 2 oder 3, **dadurch gekennzeichnet, dass** die Festigkeit der Führungsrahmen (5, 6) in Abhängigkeit von dem Abstand von dem ersten Ende (7), das in der Bearbeitungsmaschine feststehend ist, oder von dem zweiten Ende (8), das in der Bearbeitungsmaschine beweglich ist, variiert, wobei die Festigkeit der Führungsrahmen (5, 6) an dem zweiten Ende (8) größer als die Festigkeit der Führungsrahmen (5, 6) an dem ersten Ende (7) ist.

6. Faltenbalg (1) gemäß einem der Ansprüche 1 bis 5, **dadurch gekennzeichnet, dass** die Steifigkeit der Führungsrahmen (5, 6) in Abhängigkeit von dem Abstand von dem ersten Ende (7), das in der Bearbeitungsmaschine feststehend ist, oder von dem zweiten Ende (8), das in der Bearbeitungsmaschine beweglich ist, variiert, wobei Steifigkeit der Führungsrahmen (5, 6) an dem zweiten Ende (8) größer als die Steifigkeit der Führungsrahmen (5, 6) an dem ersten Ende (7) ist.

7. Faltenbalg (1) gemäß einem der Ansprüche 2, oder 3, **dadurch gekennzeichnet, dass** die Festigkeit der Führungsrahmen (5, 6) an dem ersten Ende (7) und dem zweiten Ende (8), die beide beweglich sind, größer als die Festigkeit der Führungsrahmen (5, 6) ist, die von den Enden (5, 6) entfernt sind.

8. Faltenbalg (1) gemäß einem der Ansprüche 1 bis 4, **dadurch gekennzeichnet, dass** die Steifigkeit der Führungsrahmen (5, 6) an dem ersten Ende (7) und dem zweiten Ende (8), die beide beweglich sind, größer als die Steifigkeit der Führungsrahmen (5, 6) ist, die von den Enden (5, 6) entfernt sind.

9. Faltenbalg (1) gemäß einem der vorangehenden Ansprüche, **dadurch gekennzeichnet, dass** mindestens einer der Zwischenräume (4) vorgesehen ist, in dem kein Führungsrahmen (5, 6) vorgesehen ist.

10. Faltenbalg (1) gemäß Anspruch 9, **dadurch gekennzeichnet, dass** der mindestens eine der Zwischenräume (4), in dem kein Führungsrahmen (5, 6) vorgesehen ist, zwischen Zwischenräumen (4) mit Führungsrahmen (5, 6) mit unterschiedlichen Materialstärken angeordnet ist.

11. Faltenbalg (1) gemäß Anspruch 9, **dadurch gekennzeichnet, dass** der mindestens eine der Zwischenräume (4), in dem kein Führungsrahmen (5, 6) vorgesehen ist, zwischen Zwischenräumen (4) mit Führungsrahmen (5, 6) mit gleichen Materialstärken angeordnet ist.

12. Faltenbalg (1) gemäß Anspruch 11, **dadurch gekennzeichnet, dass** mindestens ein weiterer der Zwischenräume (4), in dem kein Führungsrahmen (5, 6) vorgesehen ist, zwischen Zwischenräumen (4) mit Führungsrahmen (5, 6) mit gleichen Materialstärken angeordnet ist.

13. Faltenbalg (1) gemäß einem der vorangehenden Ansprüche, **dadurch gekennzeichnet, dass** die Führungsrahmen (5, 6) mindestens eine Materialstärke von 0,1 mm aufweisen.

14. Faltenbalg (1) gemäß einem der vorangehenden Ansprüche, **dadurch gekennzeichnet, dass** dünne Führungsrahmen (5) und dicke Führungsrahmen (6) vorgesehen sind, und zumindest einer der dicken Führungsrahmen (6) mindestens ein Führungselement (9) aufweisen und die dünnen Führungsrahmen (5) kein Führungselement (9) aufweisen.

## Claims

1. Bellows (1), for a processing machine,
having an outer enclosure (2) with several folds (3), wherein the enclosure (2) is folded, in a longitudinal direction of the bellows (1), in a zigzag-shape and comprises a first end (7) and a second end (8), and
having several guide frames (5, 6) respectively provided in an inner interstice (4) between two of the adjacent folds (3),
**characterized in that**
not all guide frames (5, 6) comprise a similar stiffness, and
not all guide frames (5, 6) comprise a similar material thickness
so that the guide frames (5, 6) are adapted to the respective spatial load of the bellows (1).

2. Bellows (1) according to claim 1, **characterized in that** not all guide frames comprise a similar strength.

3. Bellows (1) according to claim 2, **characterized in that** not all guide frames (5, 6) are made of an identical material, and the guide frames (5, 6) consist of materials having different strengths.

4. Bellows (1) according to any of the preceding clams, **characterized in that** not all guide frames (5, 6) are made of an identical material, and the guide frames (5, 6) consist of materials having different stiffnesses.

5. Bellows (1) according to any of the claims 2 or 3, **characterized in that** the strength of the guide frames (5, 6) varies depending on the distance from the first end (7) being stationary in the processing machine or from the second end (8) being movable in the processing machine, wherein the strength of the guide frames (5, 6) at the second end (8) is larger than the strength of the guide frames (5, 6) at the first end (7).

6. Bellows (1) according to any of the claims 1 to 5, **characterized in that** the stiffness of the guide frames (5, 6) varies depending on the distance from the first end (7) being stationary in the processing machine or from the second end (8) being movable in the processing machine, wherein stiffness of the guide frames (5, 6) at the second end (8) is larger than the stiffness of the guide frames (5, 6) at the first end (7).

7. Bellows (1) according to any of the claims 2 or 3, **characterized in that** the strength of the guide frames (5, 6) at the first end (7) and at the second end (8), both being movable, is larger than the strength of the guide frames (5, 6) being distant from the ends (5, 6).

8. Bellows (1) according to any of the claims 1 to 4, **characterized in that** the stiffness of the guide frames (5, 6) at the first end (7) and at the second end (8), both being movable, is larger than the stiffness of the guide frames (5, 6) being distant from the ends (5, 6).

9. Bellows (1) according to any of the preceding claims, **characterized in that** at least one of the interstices (4) is provided, in which no guide frame (5, 6) is provided.

10. Bellows (1) according to claim 9, **characterized in that** the at least one of the interstices (4), in which no guide frame (5, 6) is provided, is arranged between interstices (4) with guide frames (5, 6) having different material thicknesses.

11. Bellows (1) according to claim 9, **characterized in that** the at least one of the interstices (4), in which no guide frame (5, 6) is provided, is arranged between interstices (4) with guide frames (5, 6) having similar material thicknesses.

12. Bellows (1) according to claim 11, **characterized in that** at least one further of the interstices (4), in which no guide frame (5, 6) is provided, is arranged between interstices (4) with guide frames (5, 6) having similar material thicknesses.

13. Bellows (1) according to any of the preceding claims, **characterized in that** the guide frames (5, 6) at least comprise a material thickness of 0.1 mm.

14. Bellows (1) according to any of the preceding claims, **characterized in that** thin guide frames (5) and thick guide frames (6) are provided, and at least one of the thick guide frames (6) comprises at least one guide member (9) and the thin guide frames (5) do not comprise any guide member (9).

## Revendications

1. Soufflet (1) pour une machine d'usinage comprenant :
une enveloppe externe (2) ayant plusieurs plis (3), cette enveloppe (2) étant repliée en zigzag dans la direction longitudinale du soufflet (1) et comprenant une première extrémité (7) et une seconde extrémité (8),
plusieurs cadres de guidage (5, 6) qui sont respectivement prévus dans un espace intermédiaire interne (4) entre deux des plis voisins (3),
**caractérisé en ce que**
tous les cadres de guidage (5, 6) n'ont pas la même rigidité, et
tous les cadres de guidage (5, 6) n'ont pas la même épaisseur de matériau,
de sorte que les cadres de guidage (5, 6) soient adaptés à chaque charge locale du soufflet (1).

2. Soufflet (1) conforme à la revendication 1,
**caractérisé en ce que**
tous les cadres de guidage n'ont pas la même résistance.

3. Soufflet (1) conforme à la revendication 2,
**caractérisé en ce que**
tous les cadres de guidage (5, 6) ne sont pas réalisés en un matériau identique et les cadres de guidage (5, 6) sont réalisés en des matériaux ayant différentes résistances.

4. Soufflet (1) conforme à l'une des revendications précédentes,
**caractérisé en ce que**
tous les cadres de guidage (5, 6) ne sont pas réalisés en un matériau identique et les cadres de guidage (5, 6) sont réalisés en des matériaux ayant des rigidités différentes.

5. Soufflet (1) conforme à l'une des revendications 2 et 3,
**caractérisé en ce que**
la résistance des cadres de guidage (5, 6) varie en fonction de leur distance de la première extrémité (7) qui est fixée dans la machine d'usinage ou de la seconde extrémité (8) qui est mobile dans la machine d'usinage, la résistance des cadres de guidage (5, 6) au niveau de la seconde extrémité (8) étant supérieure à la résistance des cadres de guidage (5, 6) au niveau de leur première extrémité (7).

6. Soufflet (1) conforme à l'une des revendications 1 à 5,
**caractérisé en ce que**
la rigidité des cadres de guidage (5, 6) varie en fonction de leur distance à la première extrémité (7) qui est fixée dans la machine d'usinage ou de la seconde extrémité (8) qui est mobile dans la machine d'usinage, la rigidité des cadres de guidage (5, 6) au niveau de la seconde extrémité (8) étant supérieure à la rigidité des cadres de guidage (5, 6) au niveau de la première extrémité (7).

7. Soufflet (1) conforme à l'une des revendications 2 et 3,
**caractérisé en ce que**
la résistance des cadres de guidage (5, 6) au niveau de la première extrémité (7) et de la seconde extrémité (8) qui sont toutes deux mobiles est supérieure à la résistance des cadres de guidage (5, 6) qui sont éloignés des extrémités (5, 6).

8. Soufflet (1) conforme à l'une des revendications 1 à 4,
**caractérisé en ce que**
la rigidité des cadres de guidage (5, 6) au niveau de la première extrémité (7) et de la seconde extrémité (8) qui sont tous deux mobiles est supérieure à la rigidité des cadres de guidage (5, 6) qui sont éloignés des extrémités (5, 6).

9. Soufflet (1) conforme à l'une des revendications précédentes,
**caractérisé en ce qu'**
il est prévu au moins un espace intermédiaire (4) dans lequel il n'y a pas de cadre de guidage (5, 6).

10. Soufflet (1) conforme à la revendication 9,
**caractérisé en ce que**
l'espace intermédiaire (4) dans lequel il n'y a pas de cadre de guidage (5, 6) est situé entre des espaces intermédiaires (4) équipés de cadres de guidage (5, 6) ayant différentes résistances de matériau.

11. Soufflet (1) conforme à la revendication 9,
**caractérisé en ce que**
l'espace intermédiaire (4) dans lequel il n'y a pas de cadre de guidage (5, 6) est situé entre des espaces intermédiaires (4) équipés de cadres de guidage (5, 6) ayant la même épaisseur de matériau.

12. Soufflet (1) conforme à la revendication 11,
**caractérisé en ce qu'**
au moins un autre des espaces intermédiaires (4) dans lequel il n'y a pas de cadres de guidage (5, 6) est situé entre des espaces intermédiaires (4) équipés de cadres de guidage (5, 6) ayant la même épaisseur de matériau.

13. Soufflet (1) conforme à l'une des revendications précédentes,
**caractérisé en ce que**
les cadres de guidage (5, 6) ont une épaisseur de matériau d'au moins 0,1 mm.

14. Soufflet (1) conforme à l'une des revendications précédentes,
**caractérisé en ce qu'**
il est prévu des cadres de guidage minces (5) et des cadres de guidage épais (6), et au moins l'un des cadres de guidage épais (6) comprend au moins un élément de guidage (9) et les cadres de guidage minces (5) ne comprennent pas d'élément de guidage (9).
